# EUROPEAN PATENT APPLICATION

(11) **EP 1 466 721 A1**
(43) Date of publication of application: **13.10.2004**
(21) Application number: 03007878.6
(22) Date of filing: 07.04.2003
(51) Int. Cl.: B31F 5/00, B29C 65/08, B29C 65/00, B29C 65/02

(54) **Method and arrangement for bonding plies of tissue paper together**

(71) Applicant: SCA Hygiene Products GmbH, 68264 Mannheim (DE)
(72) Inventor: Schinkoreit, Wolfram, 69518 Unterabsteinach (DE)
(74) Representative: Hyltner, Jan-Olof

(57) **Abstract**

The present invention relates to a method of bonding plies of tissue paper together comprising the step of feeding a web of at least two plies (1,2) of tissue paper through an ultrasonic bonding device (3) comprising at least one ultrasonic horn (4) and an anvil roller (5) having a pattern of protrusions (6) on its peripheral surface. The method comprises the further step of applying fluid to the web (1,2) in a pattern corresponding to the pattern of protrusions (6) before the web passes the ultrasonic horn (4).

The invention also relates to an arrangement for performing the method.

## Description

### TECHNICAL FIELD

The present invention relates to a method of bonding plies of tissue paper together comprising the step of feeding a web of at least two plies of tissue paper through an ultrasonic bonding device comprising ultrasonic horns and an anvil roller having a pattern of protrusions on its peripheral surface. The invention also relates to an arrangement for performing the method.

### BACKGROUND OF THE INVENTION

The use of ultrasonic welding devices for bonding plies of tissue paper together instead of gluing the plies together has several advantages. The absence of gluing devices and glue in a processing line simplifies the processing line and reduces the need for maintenance. The cost for glue will of course also be saved. Furthermore, the web of bonded plies will be less stiff than a web where the plies are bonded together with the help of glue. A disadvantage is that colour can not be added to the bonded parts of an ultrasonically bonded web whereas this can be done with so called goffra incolla technology for webs having glue-bonded parts.

The quality of the bonds obtained by ultrasonic bonding of tissue papers is dependent on the properties of the tissue paper used. It is known from WO 99/25547 that the strength of an ultrasonic bond between two sheets of paper can be increased if the sheets are moistened with a determined amount of water within the regions of the intended join. In the method according to this document the moistening is obtained by spraying water onto the surface of the sheets and feeding the moistened sheets through a calendering arrangement before the passage of the ultrasonic bonding device. Such a method can not be used for the bonding of tissue papers in a pattern of bonds distributed over the whole area of the plies since wetting and subsequent drying of the plies will lead to a harsher tissue surface.

An object of the present invention is to improve the bonding quality of an ultrasonically bonded web of tissue plies. A further object is to make it possible to add colour to the bonds of such a web.

### SUMMARY OF THE INVENTION

These objects are obtained by a method of bonding plies of tissue paper together comprising the step of feeding a web of at least two plies of tissue paper through an ultrasonic bonding device comprising at least one ultrasonic horn and an anvil roller having a pattern of protrusions on its peripheral surface, characterised by the further step of applying fluid to the web in a pattern corresponding to the pattern of protrusions before the web passes the ultrasonic horn.

In a preferred embodiment fluid is applied directly to the protrusions on the anvil roller. Furthermore, a colouring fluid is applied to all or at least some of the protrusions on the anvil roller. In a variant, patterns of colouring fluid with different colours are applied to different protrusions on the anvil roller. In an advantageous embodiment fluid is applied with one or more printing devices.

The invention also relates to an arrangement for bonding plies of tissue paper together comprising means for forming a web of at least two plies of tissue paper and means for feeding the web through an ultrasonic bonding device comprising at least one ultrasonic horn and an anvil roller having a pattern of protrusions on its peripheral surface, characterised by means for applying fluid to the web in a pattern corresponding to the pattern of protrusions before the web passes the ultrasonic horn.

A preferred embodiment comprises means for applying fluid to the protrusions on the anvil roller. With advantage one or more printing devices can be used for applying fluid to the protrusions.

### BRIEF DESCRIPTION OF THE DRAWINGS

Embodiments of the invention will now be described with reference to the enclosed drawings, of which;
Fig. 1 schematically shows an arrangement for performing a first embodiment of the method according to the invention,
Fig. 2 shows a part of the arrangement of figure 1 in an enlarged view, and
Figs. 3-5 show respectively an arrangement for performing a second, third and fourth embodiment of the method according to the invention.

### DESCRIPTION OF EMBODIMENTS OF THE INVENTION

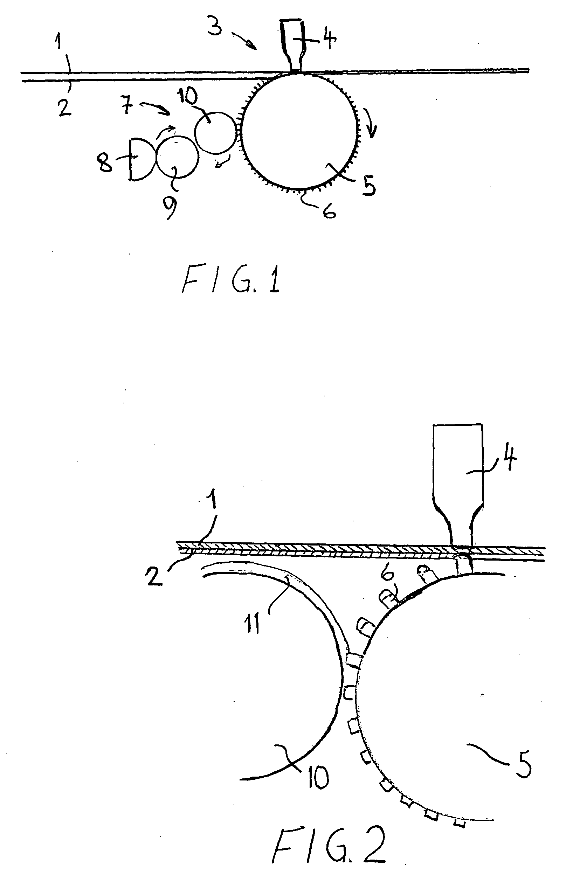

Figure 1 discloses an arrangement in which two plies 1 and 2 of tissue paper is feed through an ultrasonic bonding device 3 comprising an ultrasonic horn 4 and an anvil roller 5 having a pattern of protrusions 6 on its peripheral surface.

The tissue paper plies 1 and 2 have preferably a basis weight from 10 to 45 g/m² and a bonding area of 0,5 to 50%, preferably from 2-40% and most preferred from 5-20% of the ply-bonding zone. The ply-bonding zone consists usually of patterns of bonds being discrete spots or continuous lines or continuous network distributed in a pattern within the ply-bonding zone. Some tissue paper qualities, e.g. household towels, usually have bonds distribute all over the surface of the tissue paper more or less regularly. In such a case the ply-bonding zone covers the whole area of the tissue paper. Other tissue paper qualities, e.g. handkerchiefs, napkins and facial tissues are usually ply-bonded in zones along two or more outer sides of the product.

The ultrasonic bonding device is of conventional construction and can be obtained from the firms Herrmann Ultraschall or BRANSON, for example. The oscillating frequency of the ultrasonic horn is suitably from 15 to 50 kHz, preferably from 20 to 40 kHz, most preferably 35 kHz, and the pressure force of the ultrasonic horn is from 50 to 700 N, preferably from 200 to 500 N.

The transport speed of the plies 1,2 of tissue paper is suitably 50 to 1800 m/min, preferably 300 to 800 m/min.

The arrangement also includes a printing device 7 for applying fluid on the tops of the protrusions 6 of the anvil roller 5. The printing device 7 is of conventional type and consists of a doctor chamber 8 containing fluid and a gravure roll 9 and an application roll 10 for transferring fluid from the doctor chamber and apply it to the tops of the protrusions 6. The gravure roll 9 is rotating and picks up fluid in the chamber 8. Fluid builds up as an undefined fluid film on the surface of the gravure roll, this roll containing cells filled with and supporting fluid after passage of the chamber. A doctor blade removes superfluous amounts of fluid from the surface of the gravure roll so that a metered amount of fluid is being transferred onto the application roll 10. The application roll and the gravure roll are running with a gap between each other. The direction of rotation of the rolls can be the same or opposite to each other and the surface speeds of the rolls 9 and 10 can be the same or different dependent on the desired amount of fluid to be transferred from roll 9 to roll 10. The transferred fluid forms a fluid film on the peripheral surface of the application roll 10.

Other known types of printing devices can of course be used instead of the printing device 7 schematically described above.

Figure 2 discloses schematically the transfer of fluid from the application roll 10 to the tops of the protrusions 6 on the anvil roller 5. As indicated in figure 2, the application roll 10 is provided with a layer 11 of fluid on its peripheral surface. During the rotation of the anvil roller 5 successive protrusions 6 will penetrate into this layer 11 of fluid and drops of fluid will be taken up of the protrusion. These drops will remain on the tops of the protrusion due to surface tension until they come into contact with the tissue ply 2. This contact will occur when the protrusions 6 are in the position to co-operate with the ultrasonic horn 4 which means that fluid will be wetting the plies 1 and 2 only in the bonding area of each protrusion 6. This wetting of the plies 1 and 2 strengthen the bond obtained by the co-operation of the horn 4 and each of the protrusions 6. However, since it is only the bonding area of each protrusion that is wetted, the overall properties of the plies will not be influenced by such a wetting and there is no need to dry the bonded web.

The fluid used in the printing device 7 can be a colouring fluid so that the bonding areas obtained would be coloured. Several printing devices 7 having different colouring fluids can be placed after one another in the axial direction of the anvil roller 5 in order to obtain bonding areas with different colours over the width of the web of bonded plies 1,2 of tissue paper.

If the bonded web of tissue paper is to be divided into several separate webs for example for a web of toilet tissue which is rolled up on a roller and thereafter cut into several toilet paper rolls it is desirable to have stripes of uncoloured or white bonding areas along the lines of the web corresponding to cutting lines for the separate toilet paper rolls. Otherwise the sides of the toilet rolls will have an anaesthetic, piebald appearance. By placing several printing devices 7 along the axial length of the anvil roller 10 such stripes of uncoloured or white stripes on the bonded web of plies 1,2 of tissue paper can easily be obtained by the present invention. It is of course also possible to obtain uncoloured stripes by providing gaps between adjacent printing devices 7. The strength of the bonded areas in such stripes would be less than in other parts of the web but the overall strength of the bonding between the plies will only be marginally affected.

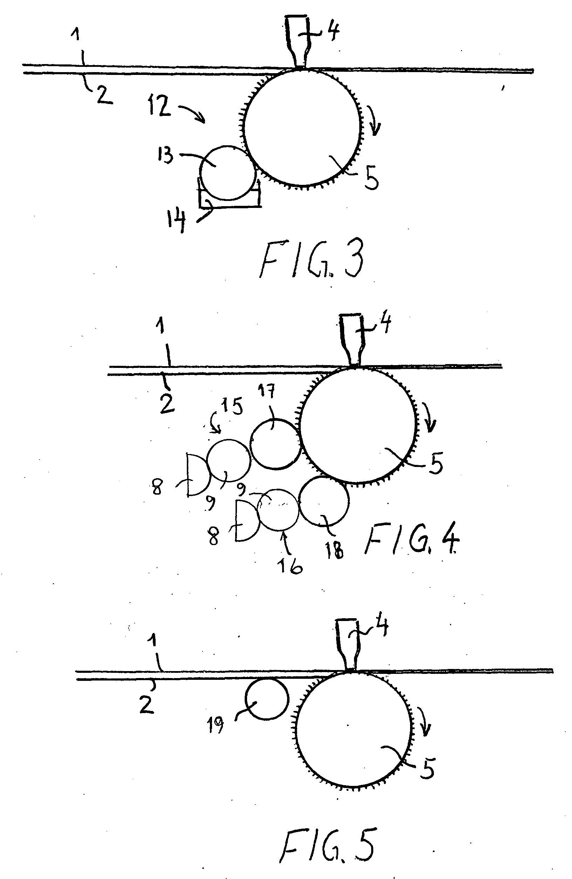

In figure 3 a second embodiment of the invention is shown. This embodiment differs from the embodiment according to figures 1 and 2 only in that another type of printing device is used. All elements in the embodiment of figure 3 identical to corresponding elements in the embodiment according to figures 1 and 2 are given the same reference numerals. The printing device 12 shown in figure 3 consists of an application roll having its lower part rotating in a bath 14 of fluid.

In figure 4 a third embodiment of the invention is shown. This embodiment differs from the embodiment according to figures 1 and 2 mainly in that several printing devices 15,16 are disposed around the circumference of the anvil roller 5. All elements in the embodiment of figure 4 identical to corresponding elements in the embodiment according to figures 1 and 2 are given the same reference numerals. The printing devices 15 and 16 schematically shown in figure 4 differ from the printing device 7 in figure 1 in that the applicator rolls made-up as engraved sleeves having different engraved patterns. The different sleeve patterns allow the application of different colour to separate areas of the surface of the anvil roller 5. By such printing devices fluid is delivered in desired patterns which means that it is possible deliver fluid only to certain of the tops of the protrusions passing the printing device. By placing several of such devices 15,16 around the periphery of the anvil roller 5 it is possible to give different colour to different protrusions having the same axial position on the anvil roller 5. It is of course possible to place more than two such printing devices around the periphery of the anvil roller 5. Different bonding areas along the same longitudinal line on the bonded web can be given different colours thereby enabling almost any design of the pattern of coloured bonding areas on the bonded web.

In figure 5 a fourth embodiment of the invention is shown. This embodiment differs from the embodiment according to figures 1 and 2 only in that another type of printing device is used. All elements in the embodiment of figure 5 identical to corresponding elements in the embodiment according to figures 1 and 2 are given the same reference numerals. In the embodiment according to figure 5, the printing device 19 is a screen-printing device. The printing device 19 has a printing pattern corresponding to the pattern of protrusion on the anvil roller 5. In this embodiment the printing device delivers the fluid to the plies 1,2 instead of to the tops of protrusions in a pattern corresponding to and coincident with the pattern of bonding areas obtained by the ultrasonic bonding. Also in this embodiment the plies are thus wetted in the bonding areas so that a strengthening of the obtained bonds occur. Also in this embodiment it is possible to use several screen printing devices with printing patterns corresponding to portions of the pattern of protrusions in order to obtain a desired multicoloured pattern of bonding areas. These printing devices can be disposed to be in contact with ply 1 instead of ply 2 as shown in figure 5.

In the embodiments according to figures 3-5 it is of course possible to dispose several printing devices along the length of the anvil roller in analogy with the embodiment according to figures 1 and 2. It is also possible to use screen-printing devices in the embodiments according to figures 1-4 in which fluid is taken up by the anvil roller 5.

The described embodiments can of course be modified within the scope of the present invention. For example more than two plies of tissue paper can be bonded together in the arrangement described with reference to figures 1-5. Furthermore, other types of printing devices can be used. Moreover, the ultrasonic bonding device can have several ultrasonic horns, preferably 5 to 40 horns, disposed in a row along the axial length of the anvil roller, preferably in a staggered relationship. The invention shall therefore only be limited by the content of the enclosed patent claims.

## Claims

1. A method of bonding plies of tissue paper together comprising the step of feeding a web of at least two plies (1,2) of tissue paper through an ultrasonic bonding device (3) comprising at least one ultrasonic horn (4) and an anvil roller (5) having a pattern of protrusions (6) on its peripheral surface, **characterised by** the further step of applying fluid to the web (1,2) in a pattern corresponding to the pattern of protrusions (6) before the web passes the ultrasonic horn (4).

2. The method according to claim 1, **characterised by** applying fluid directly to the protrusions (6) on the anvil roller (5).

3. The method according to claim 1 or 2, **characterised by** applying a colouring fluid to at least some of the protrusions (6) on the anvil roller (5).

4. The method according to claim 3, **characterised by** applying a colouring fluid to all of the protrusions (6) on the anvil roller (5).

5. The method according to claim 3 or 4, **characterised by** applying patterns of colouring fluid with different colours to different protrusions (6) on the anvil roller (5).

6. The method according any one of claims 1-5, **characterised by** applying fluid with one or more printing devices (7;12;15,16;17).

7. An arrangement for bonding plies of tissue paper together comprising means for forming a web of at least two plies (1,2) of tissue paper and means for feeding the web through an ultrasonic bonding device (3) comprising at least one ultrasonic horn (4) and an anvil roller (5) having a pattern of protrusions (6) on its peripheral surface, **characterised by** means for applying fluid to the web (1,2) in a pattern corresponding to the pattern of protrusions (6) before the web (1,2) passes the ultrasonic horn (4).

8. The arrangement according to claim 7, **characterised by** means for applying fluid to the protrusions (6) on the anvil roller (5).

9. The arrangement according to claim 8, **characterised by** one or more printing devices (7;12;15,16;17) for applying fluid to the protrusions (6).
